Europäisches Patentamt

European Patent Office

Office européen des brevets

(19)

(11) Numéro de publication: **0 151 453 B1**

# FASCICULE DE BREVET EUROPEEN

(12)

(45) Date de publication du fascicule du brevet:
05.10.88

(21) Numéro de dépôt: **85100879.7**

(22) Date de dépôt: **29.01.85**

(51) Int. Cl.⁴: **H 04 B 7/005**, H 04 L 27/00,
H 04 L 25/04

(54) **Dispositif correcteur des distorsions d'amplitude du premier et du deuxième ordre du spectre d'un signal numérique.**

(30) Priorité: **31.01.84 FR 8401463**

(43) Date de publication de la demande:
**14.08.85 Bulletin 85/33**

(45) Mention de la délivrance du brevet:
**05.10.88 Bulletin 88/40**

(84) Etats contractants désignés:
**DE FR GB IT**

(56) Documents cités:
**GB - A - 630 200
US - A - 2 444 063
US - A - 2 579 285**

(73) Titulaire: **ALCATEL THOMSON FAISCEAUX HERTZIENS,
55, rue Greffulhe, F-92300 Levallois-Perret Cédex (FR)**

(72) Inventeur: **Camand, Michel, 2, rue Anatole France,
F-92400 Courbevoie (FR)**
Inventeur: **Lample, Gérard, 15, rue Lucien Piron,
F-93110 Rosny Sous Bois (FR)**

(74) Mandataire: **Weinmiller, Jürgen et al,
Lennéstrasse 9 Postfach 24, D-8133 Feldafing (DE)**

## Description

La présente invention concerne un dispositif correcteur des distorsions d'amplitude du premier et du deuxième ordre du spectre d'un signal numérique créés lors de troubles de propagation dus à des trajets multiples.

Elle s'applique notamment à la réalisation des filtres auto-correcteurs des chaînes d'amplification à fréquence intermédiaire des émetteurs-récepteurs de faisceaux hertziens numériques, où les signaux numériques sont modulés par saut de phase et filtrés dans la bande de Nyquist.

Pour limiter l'occupation spectrale théoriquement infinie des signaux numériques modulés en phase, constitués par des symboles de durée déterminée 0, il est connu de placer, dans la chaîne de transmission, un filtre à flancs raides présentant peu de distorsion de temps de propagation de groupe et dont la bande passante, encore appelée bande de Nyquist, est égale à $\frac{1}{20}$.

Lorsque des troubles de propagation apparaissent les suroscillations du signal temporel obtenu ne sont pas toutes nulles aux instants caractéristiques multiples de 0 des symboles suivants et une distorsion intersymbole se produit.

On remédie en partie à cet inconvénient en plaçant des cellules correctrices qui permettent d'égaliser l'énergie ou l'amplitude de chaque raie du spectre d'un symbole filtré dans une bande de fréquence égale à $\frac{1+r}{20}$, r étant un cœfficient inférieur à l'unité généralement désigné sous le nom de «Roll off». Les cellules correctrices permettent soit de compenser les variations d'amplitude du premier ordre des raies du spectre qui sont à peu près linéaires en fonction de la fréquence $f = \frac{\omega}{2\pi}$ de chaque raie, soit encore de compenser des variations d'amplitude du deuxième ordre des raies du spectre qui peuvent être assimilées à une loi à peu près parabolique formant un creux ou un bombé sur la courbe d'amplitude du spectre sans apporter de distorsions supplémentaires de variations de temps de propagation de groupe.

Pour corriger les distorsions d'amplitude du premier et du deuxième ordre il est connu de mettre en série deux cellules correctrices dont l'une corrige les distorsions d'amplitude du premier ordre et la deuxième les distorsions d'amplitude du second ordre. La correction d'amplitude du premier ordre est obtenue en donnant à la première cellule une fonction de transfert $H(j\omega)$ de la forme $A_0 (1 + a\cos\omega\tau)$ et à la deuxième cellule une fonction de transfert $H'(j\omega)$ pouvant être exprimée sous la forme $A'_0 (1 + a' \cos\omega\tau')$. Comme les deux cellules sont montées en série, la fonction de transfert globale des cellules est égale au produit des fonctions de transfert de la première et la deuxième cellule. Ce produit peut être exprimé sous la forme $H(j\omega) \times H'(j\omega) = A_0 A'_0 \times (1 + a\cos\omega\tau + a'\cos\omega\tau' + aa'\cos\omega\tau\cos\omega\tau')$.

Dans cette expression les valeurs $\tau$ et $\tau'$ dépendent des constituants de chaque cellule et ces valeurs sont choisies pour permettre la correction des distorsions d'amplitude qui apparaissent autour d'une fréquence centrale $f_c$ de fonctionnement, les valeurs $\tau$ et $\tau'$ pouvant être déterminées pour qu'autour de cette fréquence la réponse en amplitude-fréquence des cellules corresponde approximativement, soit à une droite, soit à une parabole dont le sommet est centré sur la fréquence centrale de fonctionnement.

Ce mode de réalisation a toutefois pour inconvénient que la fonction de transfert globale des cellules ainsi obtenue comporte un terme parasite égal à $AA'\cos\omega\tau\cos\omega\tau'$ qui suivant les signes des cœfficients A et A' peut aller quelquefois à l'encontre des corrections souhaitées.

Le but de l'invention est de pallier l'inconvénient précité.

Un document de l'art connu, le document GB-A-630 200, décrit, notamment, un circuit d'élimination d'échos, dans un système de transmssion de signaux radioélectriques, qui comprend un filtre réalisé par quatre canaux en parallèle, deux de ces canaux étant formés d'un amplificateur et d'une ligne à retard introduisant un retard de t et 2t respectivement.

L'invention a pour objet un dispositif correcteur des distorsions d'amplitude du premier et du deuxième ordre du spectre d'un signal numérique comprenant un filtre, caractérisé en ce que ce filtre a une fonction de transfert globale $H(j\omega)$ de la forme $H(j\omega) = 1 + a \cos\omega\tau_0 + a' \cos\omega\tau'_0$, les constantes de temps $\tau_0$ et $\tau'_0$ étant déterminées pour satisfaire les relations

$$\tau_0 = \frac{2K+1}{4} + \frac{1}{f_c} \text{ et } \tau'_0 = \frac{K'}{2} \times \frac{1}{f_c},$$

K et K' étant des nombres entiers positifs, et $f_c$ représentant la fréquence autour de laquelle doit s'effectuer la correction, le filtre comprenant un premier atténuateur (1) couplé entre l'entrée et la sortie du filtre à travers une première ligne à retard (4) de constante de temps de retard fixe $\tau_0$, un deuxième atténuateur (2) couplé entre l'entrée et la sortie du filtre à travers une deuxième ligne à retard (5), court-circuitée sur elle-même, de constante de retard $\tau_1$ égale à 2 fois la constante $\tau_0$ de la première ligne à retard, un troisième atténuateur (3) couplé entre l'entrée et la sortie du filtre à travers une troisième (6) et une quatrième ligne à retard (7) branchées en parallèle, la troisième ligne à retard (6) ayant une constante de retard $\tau_2$ égale à la différence $\tau_0 - \tau'_0$ de la constante de retard de la première ligne de retard (4) avec la constante de retard $\tau'_0$ et la quatrième ligne à retard (7) ayant une constante de retard $\tau_3$ égale à la somme de la constante de retard $\tau_0$ de la première ligne à retard (4) avec la constante de retard $\tau'_0$.

D'autres caractéristiques et avantages de l'invention apparaîtront au cours de la description faite au regard des dessins annexés donnés uniquement à titre d'exemple et qui représentent:

– la figure 1 le schéma de principe du dispositif correcteur des distorsions d'amplitude du premier et du deuxième ordre du spectre d'un signal numérique selon l'invention;

– la figure 2 la réponse amplitude de fréquence du filtre représenté à la figure 1;

– la figure 3 un mode de réalisation d'un dispositif correcteur selon l'invention.

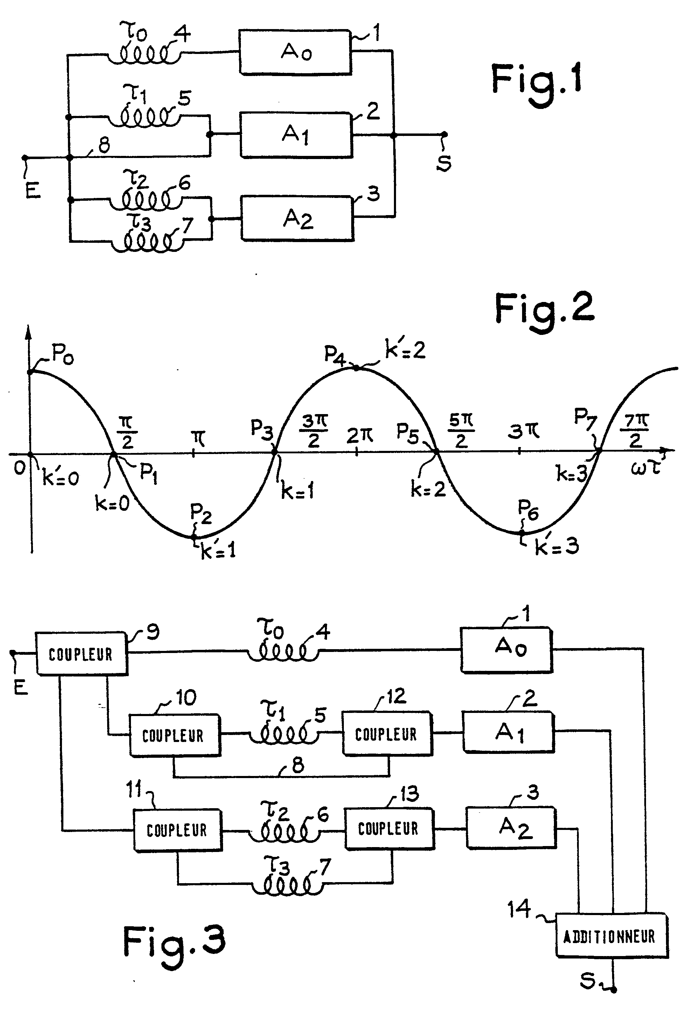

Le dispositif correcteur des distorsions d'amplitude du premier et du deuxième ordre du spectre d'un signal numérique représenté à la figure 1 comprend un filtre transverse composé de trois atténuateurs 1, 2 et 3 dont les entrées respectives sont couplées à l'entrée E du dispositif correcteur par l'intermédiaire des lignes à retard 4, 5, 6 et 7 de constantes de retard respectives $\tau_0$, $\tau_1$, $\tau_2$ et $\tau_3$. Les sorties de chacun des atténuateurs 1, 2 et 3, sont reliées ensemble à la sortie S du dispositif correcteur. La ligne à retard 5 de constante de retard $\tau_1$ est court-circuitée sur elle-même par une ligne conductrice 8.

Le filtre représenté à la figure 1 a une fonction de transfert qui peut être mise sous la forme

$$H(j\omega) = A_0 E^{-j\omega\tau_0} + A_1 E^{-j\omega\tau_1} + A_1 + A_2 E^{-j\omega\tau_2} + A_2 E^{-j\omega\tau_3}$$

ou encore sous la forme

$$H(j\omega) = A_0 E^{-j\omega\tau_0} \left[ 1 + \frac{2A_1}{A_0} \cos\omega\tau_0 + \frac{2A_2}{A_0} \cos\omega\tau'_0 \right] \quad (2)$$

si les retards $\tau_1$, $\tau_2$ et $\tau_3$ de l'équation (1) ont respectivement pour valeurs

$$\tau_1 = 2\tau_0 \quad (3)$$
$$\tau_2 = \tau_0 - \tau'_0 \quad (4)$$
$$\tau_3 = \tau_0 + \tau'_0 \quad (5)$$

Suivant les valeurs des cœfficients $A_1$ ou $A_2$ la fonction de transfert $H(j\omega)$ exprimée suivant l'équation (2) peut être représentée à la manière de la figure 2, par un cosinusoïde de période

$$\frac{1}{\tau_0} \text{ ou } \frac{1}{\tau'_0}$$

en graduant l'axe des abscisses en fréquence ou en $\omega \cdot \tau$. En choisissant judicieusement les valeurs de $\tau_0$ et $\tau'_0$ il est possible sur la figure 2 de placer la fréquence centrale de fonctionnement du dispositif correcteur soit aux points $P_1$, $P_3$, $P_7$ etc... pour lesquels la cosinusoïde représentée s'annule afin d'obtenir autour de ces points une variation d'amplitude à peu près linéaire, soit encore, aux points $P_0$, $P_2$, $P_4$, $P_6$ etc... pour lesquels la cosinusoïde représentée passe par une amplitude maximale de façon à obtenir autour de ces points une correction en amplitude du deuxième ordre de type «creusé bombé».

Des corrections du premier ordre autour d'une fréquence centrale $f_c$ seront obtenues par exemple chaque fois que la relation:

$$\omega\tau_0 = 2\pi f_c \tau_0 = (2k+1)\frac{\pi}{2} \quad (6)$$

sera vérifiée, quelque soit la valeur positive ou nulle du nombre entier k. La valeur à donner à la constante $\tau_0$ sera égale dans les conditions de l'équation (6) à:

$$\tau_0 = \frac{2k+1}{4} \frac{1}{f_c} \quad (7)$$

Par contre les corrections du deuxième ordre autour de la fréquence centrale $f_c$ pourront être obtenues en choisissant le cœfficient $\tau'_0$ de façon à vérifier la relation

$$\omega\tau'_0 = 2\pi f_c \tau'_0 = 2 k' \frac{\pi}{2} \quad (8)$$

ou encore tel que:

$$\tau'_0 = \frac{k'}{2} \frac{1}{f_c} \quad (9)$$

k' étant un nombre entier de valeur positive ou nulle.

En reportant les valeurs de $\tau_0$ et $\tau'_0$ des relations (7) et (9) dans les relations (3), (4) et (5) on peut déduire les valeurs des constantes $\tau_1$, $\tau_2$ et $\tau_3$ à donner aux lignes à retard 4 à 7 du dispositif de l'invention représenté à la figure 1.

Ces valeurs sont les suivantes:

$$\tau_0 = \frac{2k+1}{4} \frac{1}{f_c} \quad (10)$$

$$\tau_1 = \frac{2k+1}{2} \frac{1}{f_c} \quad (11)$$

$$\tau_2 = \frac{2k-2k'+1}{4} \frac{1}{f_c} \quad (12)$$

et

$$\tau_3 = \frac{2k+2k'+1}{4} \frac{1}{f_c} \quad (13)$$

Une variante de réalisation du dispositif correcteur selon l'invention est représentée à la figure 3.

Le filtre représenté dans le mode de réalisation de la figure 3 comprend comme dans le cas de la figure 1 des atténuateurs 1, 2, 3 couplés à l'entrée E du filtre au travers de lignes à retard 4, 5, 6 et 7. A la différence de la figure 1, des coupleurs 9, 10, 11 sont prévus entre l'entrée E du filtre et les lignes à retard 4, 5, 6 et 7 et des coupleurs 12, 13 sont prévus entre d'une part la ligne à retard 5 et l'atténuateur 2, et d'autre part entre les lignes à retard 6 et 7 et l'atténuateur 3, ces coupleurs étant nécessaires pour permettre le fonctionnement du dispositif correcteur selon l'invention en hautes fréquences voisines par exemple de 70 MHz. Le coupleur 9 relie l'entrée E du filtre à l'entrée de la ligne à retard 4 ainsi qu'à l'entrée des coupleurs 10 et 11. Une sortie du coupleur 10 est reliée à l'entrée de la ligne à retard 5 et une autre sortie du coupleur 10 est reliée à la ligne 8 à une entrée du coupleur 12. Le coupleur 11 a une première sortie reliée à l'entrée de la ligne à retard 6 et une deuxième sortie reliée à l'entrée de la ligne à retard 7. Le coupleur 12 assure le couplage entre les sorties de la ligne à retard 5, la ligne 8 et l'entrée de l'atténuateur 2. Le coupleur 13 assure le couplage entre la sortie de la ligne à retard 6, la sortie de la ligne à retard 7 et l'entrée de l'atténuateur 3. Les sorties des atténuateurs 1, 2 et 3 sont reliées respectivement aux entrées d'un circuit additionneur 14, qui fournit sur sa sortie S le signal numérique corrigé.

## Revendications

1. Dispositif correcteur des distorsions d'amplitude du premier et du deuxième ordre du spectre d'un signal numérique comprenant un filtre, caractérisé en ce que ce filtre a une fonction de transfert globale $H(j\omega)$ de la forme $H(j\omega) = 1 + a \cos\omega\tau_0 + a' \cos\omega\tau'_0$, les constantes de temps $\tau_0$ et $\tau'_0$ étant déterminées pour satisfaire les relations

$$\tau_0 = \frac{2K+1}{4} + \frac{1}{f_c} \text{ et } \tau'_0 = \frac{K'}{2} \times \frac{1}{f_c},$$

K et K' étant des nombres entiers positifs, et $f_c$ représentant la fréquence autour de laquelle doit s'effectuer la correction, le filtre comprenant un premier atténuateur (1) couplé entre l'entrée et la sortie du filtre à travers une première ligne à retard (4) de constante de temps de retard fixe $\tau_0$, un deuxième atténuateur (2) couplé entre l'entrée et la sortie du filtre à travers une deuxième ligne à retard (5), court-circuitée sur elle-même, de constante de retard $\tau_1$ égale à 2 fois la constante $\tau_0$ de la première ligne à retard, un troisième atténuateur (3) couplé entre l'entrée et la sortie du filtre à travers une troisième (6) et une quatrième ligne à retard (7) branchées en parallèle, la troisième ligne à retard (6) ayant une constante de retard $\tau_2$ égale à la différence $\tau_0-\tau'_0$ de la constante de retard de la première ligne de retard (4) avec la constante de retard $\tau'_0$ et la quatrième ligne à retard (7) ayant une constante de retard $\tau_3$ égale à la somme de la constante de retard $\tau_0$ de la première ligne à retard (4) avec la constante de retard $\tau'_0$.

2. Dispositif selon la revendication 1, caractérisé en ce que le rapport d'atténuation du premier atténuateur (1) est fixe.

3. Dispositif selon l'une quelconque des revendications 1 et 2, caractérisé en ce que les atténuateurs sont couplés à la sortie du filtre à travers un additionneur (14).

4. Dispositif selon l'une quelconque des revendications 1 et 3, caractérisé en ce que les lignes à retard sont couplées à l'entrée du filtre à travers le circuit coupleur (9, 10, 11) haute fréquence.

## Claims

1. A device for correcting first and second order amplitude distortions of the spectrum of a digital signal, comprising a filter, is characterized in that the filter has an overall transfer function $H(j\omega)$ of the form $H(j\omega) = 1 + a \cos\omega\tau_0 + a'\cos\omega\tau'_0$ in which the time constants $\tau_0$ and $\tau'_0$ are determined so as to satisfy the equations $\tau_0 = (2K + 1)/4 + 1/f_c$ and $\tau'_0 = (K'/2) \times (1/f_c)$ in which K and K' are positive integers and $f_c$ represents the frequency around which the correction is to be performed, said filter comprising a first attenuator (1) connected between the input and the output of the filter through a first delay line (4) which has a fixed time constant $\tau_0$, a second attenuator (2) between the input and the output of the filter through a second delay line (5) which is short-circuited in itself and which has a time constant $\tau_1$ approximately twice the time constant $\tau_0$ of the first delay line, a third attenuator (3) connected between the input and the output of the filter through a third and fourth delay line (6, 7) which are connected in parallel, the third delay line (6) having a time constant $\tau_2$ equal to the difference $(\tau_0-\tau'_0)$ between the time constant $\tau_0$ of the first delay line (4) and the time constant $\tau'_0$ and the fourth delay line (7) having a time constant $\tau_3$ equal to the sum of the time constant $\tau_0$ of the first delay line (4) and the time constant $\tau'_0$.

2. A device according to claim 1, characterized in that the attenuation rate of the first attenuator (1) is fixed.

3. A device according to any one of claims 1 and 2, characterized in that the attenuators are coupled to the output of the filter through an adder (14).

4. A device according to any one of claims 1 and 3, characterized in that the delay lines are coupled to the input of the filter through the high frequency coupler (9, 10, 11).

## Patentansprüche

1. Anordnung zur Korrektur für die Amplitudenverzerrungen erster und zweiter Ordnung des Spektrums eines Digitalsignals, mit einem Filter, dadurch gekennzeichnet, dass das Filter eine globale Übertragungsfunktion $H(j\omega) = 1 + a \cos\omega\tau + a'\cos \omega\tau'_0$ besitzt, bei der die Zeitkonstanten $\tau_0$ und $\tau'_0$ so bestimmt sind, dass die Beziehungen $\tau_0 = (2K + 1)/4 + 1/f_c$ und $\tau'_0 = (K'/2) \times (1/f_c)$ gelten, wobei K und K' ganze positive Zahlen sind und $f_c$ die Frequenz darstellt, um die herum die Korrektur erfolgen soll, und das Filter ein erstes Dämpfungsglied (1), welches über eine erste Verzögerungsleitung (4) mit fester Verzögerungszeit $\tau_0$ zwischen den Ein- und Ausgang des Filters geschaltet ist; ein zweites Dämpfungsglied (2), welches über eine zweite Verzögerungsleitung (5), die in sich kurzgeschlossen ist und eine Zeitkonstante $\tau_1$ mit dem doppelten Wert der Zeitkonstanten $\tau_0$ der ersten Verzögerungsleitung besitzt, zwischen den Ein- und Ausgang des Filters geschaltet ist; ein drittes Dämpfungsglied (3), welches über eine dritte Verzögerungsleitung (6) und eine damit parallelgeschaltete vierte Verzögerungsleitung (7) zwischen den Ein- und Ausgang des Filters geschaltet ist, wobei die dritte Verzögerungsleitung (6) eine Zeitkonstante $\tau_2$ gleich der Differenz $\tau_0-\tau'_0$ zwischen der Zeitkonstante der ersten Verzögerungsleitung (4) und der Zeitkonstante $\tau'_0$, und die vierte Verzögerungsleitung (7) eine Zeitkonstante $\tau_3$ gleich der Summe der Zeit-

konstante $\tau_0$ der ersten Verzögerungsleitung (4) und der Zeitkonstante $\tau'_0$ besitzt.

2. Anordnung nach Anspruch 1, dadurch gekennzeichnet, dass das Dämpfungsverhältnis des ersten Dämpfungsgliedes (1) fest ist.

3. Anordnung nach einem der Ansprüche 1 und 2, dadurch gekennzeichnet, dass die Dämpfungsglieder über einen Addierer (14) an den Ausgang des Filters geschaltet sind.

4. Anordnung nach einem der Ansprüche 1 und 3, dadurch gekennzeichnet, dass die Verzögerungsleitungen über den Hochfrequenzkoppelkreis (9, 10, 11) an den Eingang des Filters geschaltet sind.

Fig.1

Fig.2

Fig.3